# EUROPÄISCHE PATENTSCHRIFT

(11) **EP 2 668 071 B1**
(45) Veröffentlichungstag und Bekanntmachung des Hinweises auf die Patenterteilung: **21.06.2017**
(21) Anmeldenummer: 12704379.2
(22) Anmeldetag: 26.01.2012
(51) Int. Cl.: B60R 21/36

(54) **GASSACKANORDNUNGEN FÜR EIN KRAFTFAHRZEUG**
AIRBAG ARRANGEMENTS FOR MOTOR VEHICLE
ARRANGEMENT DE COUSSIN GONFLABLE POUR UN VÉHICULE AUTOMOBILE

(30) Priorität: 27.01.2011 DE 102011010263; 31.08.2011 DE 102011081889; 27.10.2011 DE 102011085330; 25.11.2011 DE 202011052110 U
(43) Veröffentlichungstag der Anmeldung: 04.12.2013
(73) Patentinhaber: Takata AG, 63743 Aschaffenburg (DE)
(72) Erfinder: KALLISKE, Ingo, 14476 Potsdam (DE); PORSTMANN, Marco, 16548 Glienicke/Nordbahn (DE); LUBE, Thomas, 12587 Berlin (DE)
(74) Vertreter: Maikowski & Ninnemann Patentanwälte Partnerschaft mbB
(86) Internationale Anmeldenummer: PCT/EP2012/051190
(87) Internationale Veröffentlichungsnummer: WO 2012/101198

(56) Entgegenhaltungen:
- EP-A2- 0 967 128
- EP-A2- 1 992 526
- EP-B1- 1 349 752
- WO-A1-02/079009
- WO-A1-2007/085918
- DE-A1-102009 023 779
- JP-A- 2004 168 111

## Beschreibung

Die Erfindung betrifft ein Kraftfahrzeug gemäß Anspruch 1.

Aus dem Stand der Technik sind Gassackanordnungen bekannt, die zum Schutz von Fußgängern einen aufblasbaren Gassack aufweisen, der sich im aufgeblasenen Zustand entlang der Fahrzeugfront, insbesondere entlang der Windschutzscheibe des Fahrzeugs, erstreckt, um bei einer Kollision des Fahrzeugs mit dem Fußgänger einen Aufprall des Fußgängers auf diesen Fahrzeugbereich zu dämpfen. Derartige Gassackanordnungen sind z. B. in der EP 1 349 752 B1, der DE 10 2009 023 779 A1 und der WO 02/079009 A1 beschrieben. Zudem offenbaren auch die WO 2007/085918 A1 und die JP 2004 168111 A eine in einem Motorraum eines Kraftfahrzeuges angeordnete Gassackanordnung.

Das der Erfindung zugrundeliegende Problem besteht darin, ein Fahrzeug mit einer Gassackanordnung zum Schutz eines Fußgängers oder einer sonstigen sich außerhalb des Fahrzeugs befindlichen Person zu schaffen, die auf möglichst einfache und kostensparende Weise im Fahrzeug montiert werden kann.

Dieses Problem wird durch das Kraftfahrzeug mit den Merkmalen gemäß Anspruch 1 gelöst. Weiterbildungen der Erfindung sind in den abhängigen Ansprüchen angegeben.

Danach wird in einem ersten Erfindungsaspekt ein Kraftfahrzeug mit einer Gassackanordnung bereitgestellt, wobei die Gassackanordnung aufweist:
- einen Gassack, der zum Schutz einer sich außerhalb des Fahrzeugs befindlichen Person entlang zumindest eines Teilabschnitts der Frontscheibe und/oder eines sonstigen Abschnitts einer Außenseite des Kraftfahrzeugs entfaltbar ist;
- ein Gehäuse, in dem der Gassack angeordnet ist, wobei das Gehäuse von einer sich vor der Frontscheibe erstreckenden Abdeckung eines Aufnahmebereichs des Kraftfahrzeugs verschieden ist, wobei es sich bei der Abdeckung um eine Motorhaube des Kraftfahrzeugs handelt, und wobei
- das Gehäuse so ausgestaltet ist, dass es den Gassack zumindest teilweise zu der Abdeckung des Kraftfahrzeugs hin abdeckt,
- das Gehäuse ein erstes und ein zweites Gehäuseteil umfasst, wobei das erste Gehäuseteil eine Öffnung zum Einführen des Gassacks in das Gehäuse aufweist und das zweite Gehäuseteil die Öffnung in dem ersten Gehäuseteil zumindest teilweise überdeckt und den Gassack zu der Abdeckung hin abdeckt, d.h. sich zumindest teilweise zwischen dem ersten Gehäuseteil und der der Motorhaube des Fahrzeugs befindet, und
- das erste Gehäuseteil mit dem zweiten Gehäuseteil verbunden ist, wobei
- die Gassackanordnung so angeordnet ist, dass die Öffnung des ersten Gehäuseteils der Motorhaube zugewandt ist, wobei das zweite Gehäuseteil von Abschnitten der Motorhaube überdeckt ist und sich der Gassack zwischen einem der Frontscheibe zugewandten Randbereich der Motorhaube und einer darunterliegenden Fahrzeugstruktur hindurch entfaltet.

Bei der Abdeckung handelt es sich um eine Motorhaube, die einen Motorraum des Fahrzeugs abdeckt.

Das Gehäuse der Gassackanordnung umschließt den Gassack zumindest teilweise auch im Bereich der Abdeckung, was den Gassack und gegebenenfalls weitere Komponenten, die in dem Gehäuse untergebracht sind, insbesondere gegenüber Umwelteinflüssen (wie z. B. Feuchtigkeit und/oder Staub) schützt und z.B. gleichzeitig die Lage des zusammengefalteten Gassackes sichert. Somit lässt sich die Gassackanordnung vormontieren und im vormontierten Zustand bis zur Montage am Fahrzeug ohne zusätzliche Maßnahmen handhaben, so dass keine Notwendigkeit besteht, die Gassackanordnung unmittelbar nach ihrer Herstellung im Fahrzeug (an der Abdeckung) zu fixieren. Dies verringert z.B. den logistischen Aufwand bei der Fahrzeugherstellung. Denkbar ist auch, dass das Gehäuse den Gassack vollständig umschließt.

Denkbar ist natürlich, dass das zweite Gehäuseteil die Öffnung zum Einführen des Gassacks vollständig überdeckt und z. B. dicht abschließt. Darüber hinaus kann das zweite Gehäuseteil nach Montage der Gassackanordnung im Fahrzeug zumindest näherungsweise parallel zur Abdeckung verlaufen.

Gemäß einer anderen Weiterbildung der Erfindung ist das erste Gehäuseteil formstabiler ausgebildet als das zweite Gehäuseteil, d. h., das erste Gehäuseteil ist aus einem weniger biegbaren Material ausgeformt als das zweite Gehäuseteil. Beispielsweise handelt es sich bei dem zweiten Gehäuseteil um eine Folie (z. B. um eine Kunststofffolie, denkbar wäre jedoch auch eine Folie aus Metall), die z. B. eine Dicke von weniger als 1 mm oder weniger als 0, 5 mm (z.B. ca. 0,2 mm) aufweist.

Die Verbindung zwischen den beiden Gehäuseteilen ist z. B. per Stoffschluss realisiert, etwa durch eine Schweiß- oder Klebverbindung. Die Verbindung zwischen dem ersten und dem zweiten Gehäuseteil ist insbesondere dicht ausgeführt, so dass einem Eindringen von Feuchtigkeit und/oder Fremdkörpern (Staub) in das Gehäuse entgegengewirkt wird. Das erste Gehäuseteil ist beispielsweise (etwa einstückig) aus einem Metall oder einem Kunststoff gebildet.

Gemäß einer anderen Ausgestaltung der Erfindung bildet das erste Gehäuseteil eine durch einen Boden und eine vom Boden winklig oder senkrecht abstehende Seitenwand begrenzte Aufnahme aus, in der der Gassack angeordnet ist. Insbesondere ist das erste Gehäuseteil wannenartig ausgebildet, d.h. mit einer umlaufenden Seitenwand, die von einem (z.B. im Wesentlichen plan verlaufenden) Boden absteht.

Darüber hinaus kann vorgesehen sein, dass das erste Gehäuseteil einen Aufreißbereich aufweist, der unter dem Druck des sich entfaltenden Gassacks eine Öffnung freigibt, durch die der Gassack aus dem Gehäuse austreten kann. Denkbar ist z. B., dass der Aufreißbereich durch eine Schwächung (z.B. in Form einer Perforation und/oder einer Materialverdünnung) des Materials des ersten Gehäuseteils ausgebildet ist. Beispielsweise wird der Aufreißbereich durch eine Schwächung einer Seitenwand und/oder eines Bodens des ersten Gehäuseteils ausgeformt. Die Schwächung (bzw. die mehreren Schwächungen) verläuft insbesondere zumindest abschnittsweise linienartig (z.B. geradlinig).

Denkbar ist auch, dass die den Aufreißbereich ausbildende Schwächung angrenzend an eine Öffnung im ersten Gehäuseteil, die zum Einführen des Gassacks in das Gehäuse dient (s.o.), verläuft. Beispielsweise beträgt die Entfernung zwischen der Schwächung und der durch das zweite Gehäuseteil überdeckten Öffnung im ersten Gehäuseteil weniger als 10 mm.

Nach einer anderen Weiterbildung der Erfindung weist das erste Gehäuseteil mindestens eine Befestigungsstruktur auf, über die es an dem Fahrzeug (insbesondere mit der Motorhaube) verbindbar ist. Beispielsweise ist die Befestigungsstruktur in Form einer Befestigungsöffnung ausgebildet, durch die z. B. ein von der Motorhaube abstehender Gewindebolzen oder ein Rastelement hindurchgeführt werden kann und so die Gassackanordnung mit einem Abschnitt der Motorhaube verschraubt bzw. verrastet wird. Ergänzend kann die Motorhaube einen Hinterschnitt bildende Befestigungsstrukturen aufweisen, in die bei der Montage das erste Gehäuseteil eingeschoben wird. Dadurch können beispielsweise die vorher erwähnten Befestigungsstrukturen in ihrer Anzahl reduziert werden, da eine entsprechend ausgeführte umlaufende Befestigung nicht mehr notwendig ist.

Gemäß einer anderen Ausgestaltung der Erfindung weist der Gassack mehrere Kammern auf, die durch mindestens ein flexibles Trennelement voneinander getrennt sind. Beispielsweise ist das flexible Trennelement in Form eines Fangbandes ausgestaltet.

Beispielsweise weist der Gassack mindestens eine erste, zweite und dritte Kammer auf, die sich im entfalteten Zustand des Gassacks hintereinander entlang der Windschutzscheibe des Fahrzeugs erstrecken, wobei sich die zweite Kammer zwischen der ersten und der dritten Kammer befindet und die zweite Kammer z.B. über ein erstes Trennelement von der ersten Kammer und über ein zweites Trennelement von der dritten Kammer getrennt ist. Beispielsweise verläuft das erste Trennelement zumindest näherungsweise entlang einer ersten Ebene und das zweite Trennelement entlang einer zweiten, winklig zur ersten Ebene orientierten Ebene.

Denkbar ist auch, dass das erste und das zweite Trennelement jeweils mit einem ersten Abschnitt an voneinander beabstandeten Abschnitten einer Innenseite des Gassacks mit diesem verbunden sind und mit einem zweiten Abschnitt mit Teilabschnitten der Innenseite des Gassacks, die aneinander angrenzen, überlappen oder identisch sind. Beispielsweise bilden das erste und das zweite Trennelement in Schnittansicht (Schnitt entlang einer durch die Fahrzeuglängs- und Fahrzeughöhenrichtung aufgespannten Ebene) betrachtet und bezogen auf den aufgeblasenen Zustand des Gassacks ein "V".

Bei dem ersten und dem zweiten Trennelement handelt es sich z.B. um zwei separate Trennelemente (z. B. Fangbänder). Möglich ist jedoch auch, dass das erste Trennelement mit dem zweiten Trennelement einstückig verbunden ist, d.h. das erste und das zweite Trennelement sind durch unterschiedliche Abschnitte eines durchgehenden Trennelementes (z.B. eines Fangbandes) ausgebildet.

Die Gassackanordnung kann des Weiteren einen Gasgenerator zum Aufblasen des Gassacks sowie eine sich im Inneren des Gassacks erstreckende flexible Gasleiteinrichtung zum Leiten des vom Gasgenerator erzeugten Gases aufweisen. Beispielsweise erstreckt sich die flexible Gasleiteinrichtung, die z. B. schlauchartig aus einem Gassackmaterial ausgeformt ist, von dem Gasgenerator in eine oder mehrere Kammern des Gassacks hinein. Denkbar ist auch, dass sich zwischen der flexiblen Gasleiteinrichtung und dem Gasgenerator eine weitere, starre Gasleiteinrichtung befindet, über die der Gasgenerator mit der flexiblen Gasleiteinrichtung gasleitend verbunden ist.

Die Gassackanordnung kann auch eine Einrichtung zum Bewegen zumindest eines Teilabschnitts des aufgeblasenen Gassacks aus dem Sichtfeld des Fahrzeugführers aufweisen. Denkbar ist, dass die Einrichtung zum Bewegen mindestens ein Verbindungselement aufweist, das sowohl mit dem Gassack als auch mit dem Fahrzeug direkt verbunden ist, wobei das Verbindungselement elastisch ausgebildet ist oder die Gassackanordnung Rückstellkrafterzeugungsmittel aufweist, über die dann das Verbindungselement mit dem Fahrzeug indirekt verbunden ist.

Die Einrichtung zum Bewegen ist z.B. auf der Fahrerseite angeordnet (natürlich auch auf Fahrer- und Beifahrerseite möglich) und ermöglicht nach der Entfaltung des Gassackes und einem eventuellen Aufprall eines Fußgängers die Sicht nach vorn, speziell für den Fahrzeugführer. Die Einrichtung zum Bewegen kann selbststeuernd ausgelegt sein.

Möglich ist auch, dass die Einrichtung zum Bewegen durch eine Steuereinheit (Electronic Control Unit - ECU) angesteuert und über die ECU aktiviert wird.

Die Rückstellkrafterzeugungsmittel weisen beispielsweise eine Rückholmechanik auf, die insbesondere in dem Gehäuse der Gassackanordnung angeordnet ist. Bei einer selbststeuernden Auslegung könnte die Rückholmechanik beispielsweise eine Aufwickelspule, auf die das Verbindungselement vor Entfalten des Gassacks zumindest teilweise aufgewickelt ist und die mit einer Spiralfeder zusammenwirkt, aufweisen. Bei der Entfaltung des Gassackes entsteht durch den sich im Gassackinneren aufbauenden Druck eine Kraft, die durch das Verbindungselement auf die Aufwickelspule übertragen wird und die Spiralfeder spannt. Die Spiralfeder wird dabei abgewickelt. Sinkt der Gassackinnendruck reduziert sich die auf die Aufwickelspule übertragene Kraft. Die Spiralfeder wickelt sich wieder auf (entspannt sich) und zieht dabei das Verbindungselement und damit den Gassack zurück aus dem Sichtfeld des Fahrzeugführers. Bei einer ECU-gesteuerten Rückholeinrichtung ist z.B. ein Aktuator vorgesehen, über den das Verbindungselement bewegt werden kann. Als Aktuator können beispielsweise ein Elektromotor, welcher eine Aufwickelspule antreibt, oder eine pyrotechnisch angetriebene Kolben-Zylindereinheit vorgesehen sein.

Die Einrichtung zum Bewegen ist selbstverständlich nicht auf diese Ausgestaltungen beschränkt. Denkbar sind auch andere Realisierungen, wie sie z.B. in der deutschen Patentanmeldung DE 10 2011 010 263.9 vom 27.01.2011 beschrieben sind. Auf die DE 10 2011 010 263.9 wird hiermit insofern ausdrücklich Bezug genommen.

In einer anderen Ausgestaltung der Erfindung weist die Gassackanordnung eine Einrichtung zum Absenken des Innendrucks im Gassack auf. Durch die Einrichtung zum Absenken des Innendrucks kann z.B. auch dem Abbau des Gassackinnendruckes nach einer vorgebbaren Zeit ein anderer Verlauf gegeben werden, konkret z.B. ein schnelleres Absenken erzwungen werden, so dass z.B. für das Bewegen (Zurückziehen) des Gassackes mit Hilfe der oben beschriebenen Einrichtung zum Bewegen des Gassacks geringere Kräfte aufgebracht werden müssen. Die Einrichtung zur Absenkung des Gassackinnendruckes kann ebenfalls z.B. selbststeuernd (z.B. als selbstadaptive Abströmöffnung) ausgeführt sein oder wird durch eine ECU angesteuert und aktiviert. Letzteres kann beispielsweise zu einem vorgebbaren Zeitpunkt nach der Aktivierung des Gasgenerators erfolgen. Beispielsweise umfasst die Einrichtung zum Absenken des Innendrucks eine oder mehrere Abströmöffnungen, die z. B. selbstadaptiv ausgebildet sind oder deren Abströmquerschnitt aktiv (z. B. über einen entsprechenden Aktuator) gesteuert werden kann.

Geeignete Einrichtungen zum Absenken des Gassackinnendrucks sind z. B. in den deutschen Patentanmeldungen DE 10 2005 039 418.3 vom 16.08.2005 und DE 10 2006 010 953.8 vom 03.03.2006 beschrieben, auf die insofern ausdrücklich Bezug genommen wird.

Die Erfindung wird im Folgenden anhand von Ausführungsbeispielen unter Bezugnahme auf die Figuren näher erläutert. Es zeigen:
- Fig. 1: ein erfindungsgemäßes Kraftfahrzeug in Draufsicht mit einer Gassackanordnung gemäß einem Ausführungsbeispiel der Erfindung;
- Fig. 2: eine Schnittansicht durch das Fahrzeug aus Fig. 1;
- Fig. 3: eine Detailansicht der Fig. 2;
- Fig. 4: die Gassackanordnung aus Fig. 1 nach Aktivierung des Gassacks;
- Fig. 5: eine Schnittansicht durch das Fahrzeug aus Fig. 4;
- Fig. 6: eine Gassackanordnung im aktivierten Zustand gemäß einem weiteren Ausführungsbeispiel;

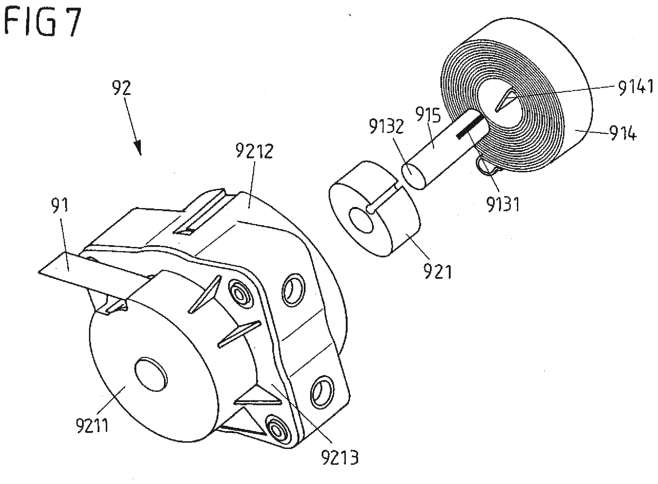

- Fig. 7: eine Variante einer Rückholmechanik einer Rückholeinrichtung in Explosionsdarstellung; und

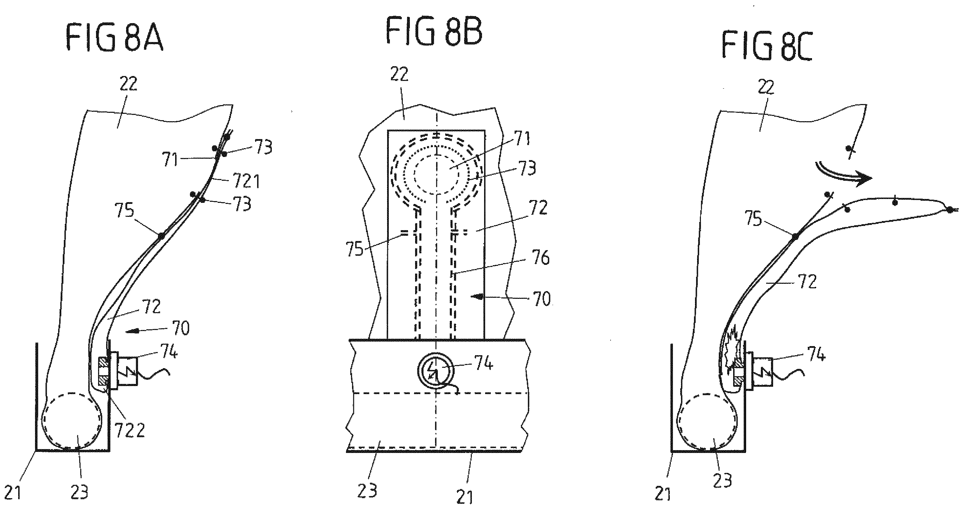

- Fig. 8A bis 8C: eine Ausgestaltung einer Druckreduzierungsvorrichtung.

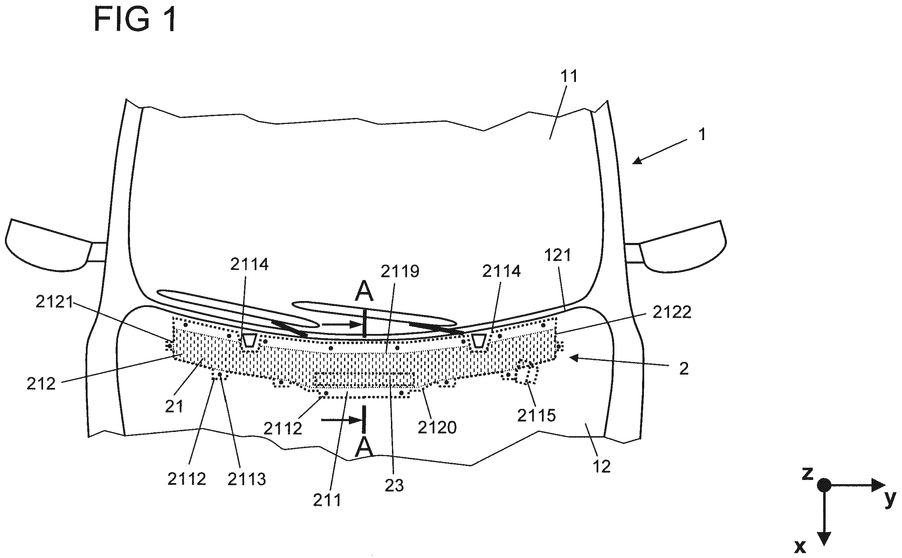

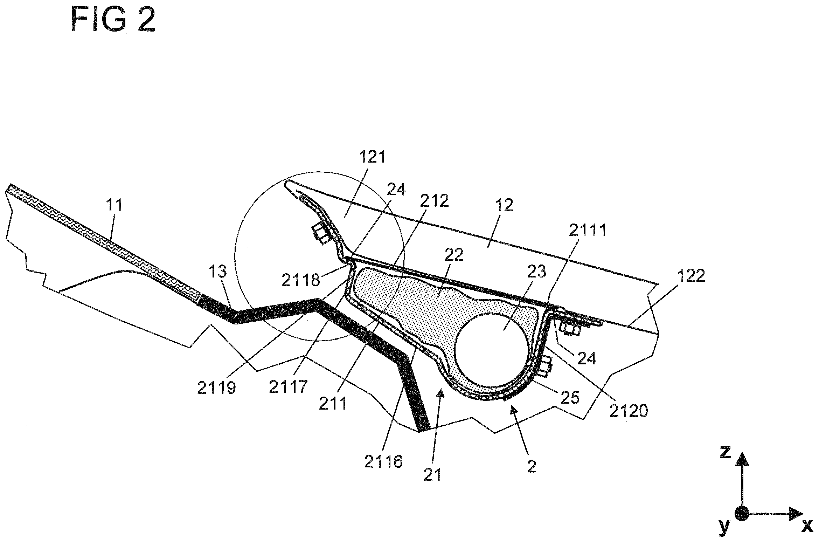

Fig. 1 zeigt in Draufsicht eine an einem erfindungsgemäßen Kraftfahrzeug 1 angeordnete Gassackanordnung in Form eines Gassackmoduls 2. Das Gassackmodul 2 ist im Übergangsbereich zwischen einer Frontscheibe (Windschutzscheibe 11) und einer Abdeckung in Form einer Motorhaube 12 des Fahrzeugs angeordnet. Genauer ausgedrückt befindet sich das komplette Gassackmodul 2 im nicht aktivierten Zustand unterhalb der Motorhaube 12 und zwar entlang eines der Windschutzscheibe 11 zugewandten Randbereichs 121 der Motorhaube 12, so dass das Gassackmodul 2 seiner größte Ausdehnung im Wesentlichen quer zur Fahrzeuglängsrichtung x (Fahrtrichtung) besitzt. Fig. 2 zeigt einen Schnitt durch das Fahrzeug entlang A-A in Fig.1. Der Windschutzscheibe 12 schließt sich zum Motorraum des Fahrzeugs hin ein Windlauf 13 an.

Denkbar ist grundsätzlich auch, dass sich das Gassackmodul 2 zumindest abschnittsweise oberhalb der Motorhaube erstreckt. Der oberhalb der Motorhaube befindliche Bereich eines derartigen Gassacksmoduls (insbesondere des Gehäuses) ist in diesem Fall z.B. anders gestaltet als bei der Anordnung unterhalb der Motorhaube, da andere Anforderungen z.B. hinsichtlich des Designs und/oder der Aerodynamik erfüllt werden müssen.

Das Gassackmodul 2 weist ein Gehäuse 21 auf, in dem sich ein gefalteter Gassack 22 (z.B. in Form eines Gassackpakets) sowie ein Gasgenerator 23 zum Aufblasen des Gassacks 22 befinden. Das Gehäuse 21 umfasst ein erstes und ein zweites Gehäuseteil 211, 212, wobei das erste Gehäuseteil 211 formstabiler als das zweite Gehäuseteil 212 ausgebildet ist. Das zweite Gehäuseteil 212 (schraffierter Bereich in Fig. 1) überdeckt eine Öffnung 2111 in dem ersten Gehäuseteil 211, wobei die Öffnung 2111 als Einführöffnung dient, über die der Gassack 22 in das Gehäuse 21 eingelegt wird.

Für die Unterbringung des gefalteten Gassackes 22 ist das erste Gehäuseteil 211 mit einer wannenförmigen Vertiefung versehen, die einen der Motorhaube 12 abgewandten Boden 2116 aufweist, der von einer umlaufenden und sich vom Boden 2116 in Richtung der Motorhaube 12 erstreckenden Seitenwand 2117 vollständig umrandet wird. Der Bodenbereich 2116 weist in seinem der Windschutzscheibe 11 zugewandten Bereich einen sich im Wesentlichen plan erstreckenden ersten Abschnitt auf, an den sich ein mit einer Krümmung versehener zweiter Abschnitt anschließt, wobei der gekrümmte zweite Abschnitt eine Aufnahme ausformt, in der der Gasgenerator 23 angeordnet ist. Ein oberer Rand 2118 der umlaufenden Seitenwand 2117 begrenzt die Öffnung 2111, die bezogen auf den im Fahrzeug verbauten Zustand des Gassackmoduls 2 durch das zweite Gehäuseteil 212 verschlossen wird.

Die umlaufende Seitenwand 2117 besitzt einen sich im Wesentlichen quer zur Fahrtrichtung x erstreckenden, der Windschutzscheibe 11 zugewandten ersten Bereich 2119 (Entfaltungsbereich), einen vom ersten Bereich in Fahrtrichtung x beabstandeten sich ebenfalls sich quer zur Fahrtrichtung x erstreckenden und der Windschutzscheibe 12 abgewandten zweiten Bereich 2120 sowie zwei den ersten und den zweiten Bereich 2119 und 2120 miteinander verbindende Seitenbereiche 2121, 2122. Die Seitenbereiche 2121, 2122 verlaufen im Wesentlichen in Fahrtrichtung x und sind quer zur Fahrtrichtung voneinander beabstandet.

Die beiden Gehäuseteile 211, 212 sind insbesondere stoffschlüssig miteinander verbunden, etwa über einen Verbindungsbereich, in dem sich Abschnitte des ersten und des zweiten Gehäuseteils 211, 212 überlappen. Der Verbindungsbereich umfasst einen Anlageabschnitt 24 des ersten Gehäuseteils 211, der flanschartig vom oberen Rand 2118 der umlaufenden Seitenwand 2117 des ersten Gehäuses 211 absteht und z.B. zumindest näherungsweise flächig ausgebildet ist, sowie zumindest annähernd im rechten Winkel von der umlaufenden Seitenwand 2117 abknickt und parallel zur Motorhaube 12 verläuft.

Die Verbindung der Gehäuseteile 211, 212 ist insbesondere dicht ausgeführt, um die im Gehäuse befindlichen Modulkomponenten vor der Einwirkung von Feuchtigkeit und Fremdkörpern zu schützen. Beispielsweise besitzt ein derartig ausgestaltetes Gassackmodul den Schutzgrad IP5K7 und aufwärts. In diesem Zusammenhang wird auf die DIN 40050-9:1993-05 sowie die ISO 20653:2006-08 verwiesen.

Beispielsweise können aus Gewichtsgründen beide Gehäuseteile 211, 212 in Kunststoff ausgeführt sein. Da das zweite Gehäuseteil 212 (z.B. vollständig) durch stabile Abschnitte der Motorhaube 12 überdeckt sein wird, sind die Anforderungen an das zweite Gehäuseteil 212 hinsichtlich Festigkeit und Formstabilität bei dessen Auslegung relativ gering. Insbesondere sollen, wie erwähnt, z.B. die im Inneren des Gehäuses befindlichen Teile des Gassackmoduls gegenüber Umwelteinflüssen bis zum Einbau des Gassackmoduls in das Fahrzeug und die Abdichtung des Gehäuseinneren über die Fahrzeuglebensdauer durch das zweite Gehäuseteil 212 realisiert werden. Dies eröffnet die Möglichkeit, das zweite Gehäuseteil 212 weniger formstabil als das erste Gehäuseteil 211 auszuführen, beispielsweise als PE-Folie, was ebenfalls zur Gewichtsreduzierung beitragen kann.

Das erste Gehäuseteil 211 weist Befestigungsstrukturen in Form von Befestigungsfortsätzen 2112, die von dem Rand 2118 des ersten Gehäuseteils 211 abstehen und die Befestigungsöffnungen 2113 aufweisen, wobei das erste Gehäuseteil 211 (und damit das gesamte Gassackmodul 2) über die Befestigungsöffnungen 2113 an der Motorhaube 12 befestigt ist. Einige der Befestigungsfortsätze 2112 sind laschenartig ausgebildet, wobei beispielsweise ihre Breite entlang des Randes 2118 des ersten Gehäuseteils 211 etwa ihrer Länge senkrecht zum Rand 2118 des ersten Gehäuseteils 211 entspricht oder kleiner ist als die Länge. Andere der Befestigungsfortsätze 2112 sind flanschartig ausgebildet, d.h. ihre Breite entlang des Randes 2118 des ersten Gehäuseteils 211 ist deutlich größer als ihre Länge senkrecht zum Rand 2118 des ersten Gehäuseteils 211. Beispielsweise beträgt die Breite mindestens das Dreifache der Länge.

Darüber hinaus weist die Motorhaube 12 im Bereich der Befestigungsfortsätze 2112 Verstärkungen (Versteifungs-Nerstärkungsteile 122) auf, an denen Gewindebolzen angeordnet sind, die die Befestigungsöffnungen 2113 im ersten Gehäuseteil 211 durchragen und mit Muttern versehen sind. Die Ausführung der Befestigung des ersten Gehäuseteils 211 an der Motorhaube 12 kann anstelle einer Schraubverbindung auch durch andere Befestigungsarten ergänzt bzw. ersetzt werden. Ein Beispiel hierfür ist die Ausführung der Verbindung als Rastverbindung.

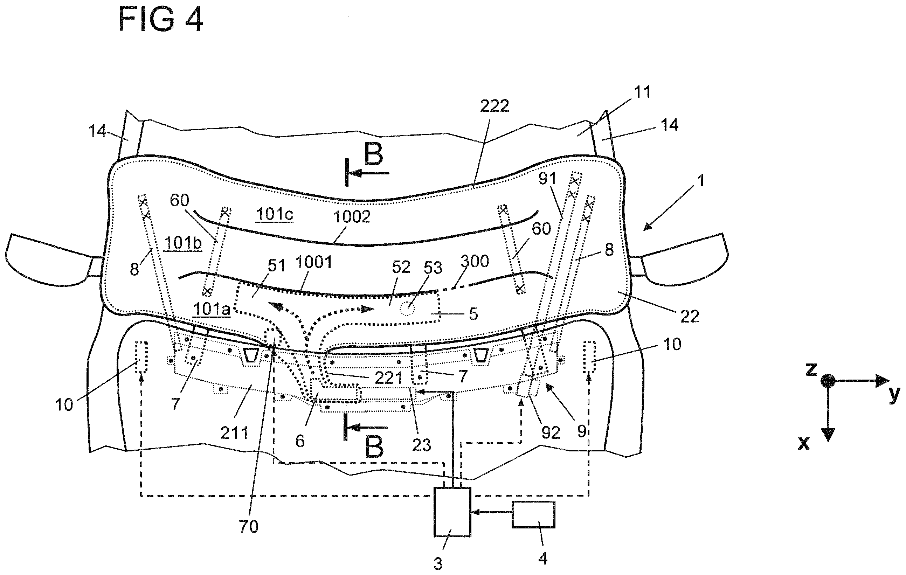

Das erste Gehäuseteil 211 ist weiterhin mit Aussparungen 2114 für an der Motorhaube 12 angeordnete Baugruppen (z.B. die Düsen der Scheibenwaschanlage und/oder deren Verschlauchung) sowie mit mindestens einer Aufnahme 2115 für in das Gassackmodul 2 zu integrierende Unterbaugruppen versehen. Eine derartige Unterbaugruppe könnte beispielsweise eine Aufnahme (Gehäuse) einer Rückholmechanik zum Rückholen des entfalteten Gassacks (wie in Zusammenhang mit Fig. 4 weiter unten erläutert) oder eine Aktuatorik zur Senkung des Gassackinnendruckes sein (wie ebenfalls weiter unten erläutert).

Die Befestigung des ersten Gehäuseteils 211 an der Motorhaube erfolgt derart, dass die Öffnung 2111 zum Einführen des gefalteten Gassackes 22 und des Gasgenerators 23 in das Gehäuse 2 dient, der Motorhaube 12 zugewandt ist. Insbesondere ist die Öffnung 2111 zumindest nahezu vollständig durch die Motorhaube 12 abgedeckt, so dass die Motorhaube 12 auch einen mechanischen Schutz des eingebauten Gassackmoduls bietet.

Bei einer entsprechenden Auslegung des Gassackmoduls 2, speziell des ersten Gehäuseteils 211, kann es die Motorhaube 12 derart versteifen, dass dort kein zusätzlicher diesbezüglicher Aufwand für die Lagerung des Gassackmoduls notwendig ist oder der Aufwand im Vergleich mit vorbekannten Gassackmodulen reduziert werden kann. Mit anderen Worten, das Gehäuse 2 des Gassackmoduls 1 kann selbst als Versteifungselement wirken oder sich selber tragen.

Aufgrund erhöhter Belastungen insbesondere des ersten Gehäuseteils 211 im Bereich des Gasgenerators 23 bei dessen Aktivierung kann ein Verstärkungsblech 25 vorgesehen sein. Das Verstärkungsblech 25 ist insbesondere an einem oder an mehreren der Befestigungsfortsätze 2112 festgelegt, wobei es z.B. zwischen den zur Befestigung des ersten Gehäuseteils 211 an der Motorhaube 12 benutzten Muttern und dem ersten Gehäuseteil 211 eingeklemmt wird. Das Verstärkungsblech 25 ist z.B. derart ausgelegt, dass es gleichzeitig der Befestigung des Gasgenerators 23 (und somit des Gassackes 22) am ersten Gehäuseteil 211 dient. Dies geschieht z.B. mittels Gewindebolzen, die vom Gasgenerator 23 abragen, und mit diesen im Eingriff stehenden Muttern. Darüber hinaus kann an dem Verstärkungsblech 25 eine Einrichtung zur Erdung des Gassackmoduls 2 vorgesehen werden.

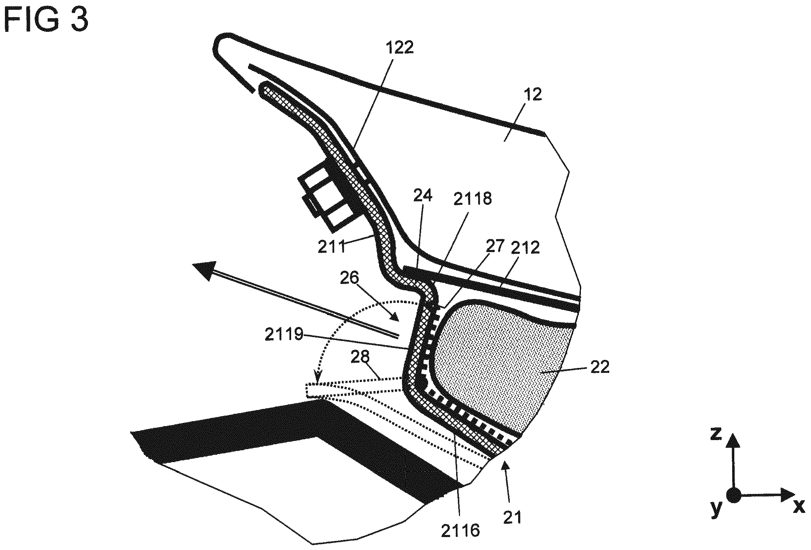

Fig. 3 zeigt eine Detailansicht des in den Fig. 1 und 2 dargestellten Ausführungsbeispiels und zwar in dem der Windschutzscheibe 12 zugewandten Randbereich 121 der Motorhaube 12. Verdeutlicht werden mit Fig. 3 mögliche Verläufe von Aufreißbereichen, die unter dem Druck des sich entfaltenden Gassacks aufreißen und eine Öffnung freigeben, durch die der Gassack aus dem Gehäuse 21 austreten kann.

Prinzipiell ist es möglich, eine Öffnung für den sich entfaltenden Gassack durch Zerstören der Verbindung zwischen dem ersten und zweiten Gehäuseteil 211, 212 zu erzeugen. Da es sich hierbei wie vorstehend erläutert um eine vorzugsweise stoffschlüssige Verbindung handelt, können beim Zerstören dieser Verbindung jedoch Probleme hinsichtlich z.B. der Reproduzierbarkeit auftreten. Beispielsweise könnte das Lösen der Verbindung trotz identischer Krafteinwirkung an unterschiedlichen Stellen erfolgen, woraus ein unterschiedliches Entfaltungsverhalten des Gassacks resultieren würde.

Aus diesem Grund kann es zweckmäßig sein, den Aufreißbereich durch Schwächungen in dem ersten Gehäuseteil 211 auszubilden, z.B. benachbart zum Verbindungsbereich, über den das erste und das zweite Gehäuseteil 211, 212 miteinander sind, d.h. benachbart zu dem Anlageabschnitt 24 des ersten Gehäuseteils 211. Die Schwächungen begrenzen die Öffnung, die durch den sich (entlang der in Fig. 3 durch einen Pfeil angedeuteten Richtung) entfaltenden Gassack gebildet wird. Insbesondere wird ein Aufreißbereich 26 durch Schwächungen 27 (Sollbruchbereiche) in dem der Motorhaube 12 zugewandten Seitenwandbereich 2119 des ersten Gehäuseteils 211 eingebracht. Die Schwächungen 27 verlaufen linienförmig (durchgehend oder mit Unterbrechungen) und sind z.B. in Form von Vertiefungen ausgebildet, wobei die Schwächungen 27 in ihrer Gesamtheit den Aufreißbereich ausbilden.

Beispielsweise verläuft eine Schwächung 27 in dem Seitenwandbereich 2119 entlang des oberen Randes 2118, d.h. die Schwächung 27 erstreckt sich im Wesentlichen in Fahrzeugquerrichtung und in der Nähe (z.B. mit einem Abstand von weniger als 10 mm) von dem oberen Rand 2118. Die Schwächung 27 kann sich auch in die Seitenbereiche 2121, 2122 des ersten Gehäuseteils 211 und/oder in einen (eine Krümmung aufweisenden) Übergangsbereich zwischen dem Bereich 2119 und den Seitenbereichen 2121, 2122 hineinerstrecken.

Weitere Schwächungen 27 (in Fig. 3 fett gepunktet dargestellt) verlaufen in Richtung auf den Boden 2116, wobei sie sich (z.B. überwiegend) in dem Seitenwandbereich 2119 erstrecken und z.B. auch in den Boden 2116 des ersten Gehäuseteils 211 hineinverlaufen. Alternativ können die Schwächungen 27 in den benachbart zum Seitenwandbereich 2119 und zum Boden 2116 angeordneten Seitenbereichen 2121, 2122, bzw. in den entsprechenden Übergangsbereichen, verlaufen.

In einer ersten Variante enden die Schwächungen, die den Aufreißbereich in dem ersten Gehäuseteil 211 ausbilden, in der Nähe des Bodens 2116, erstrecken sich aber nicht in den Boden 2116 hinein. Die Öffnung für den sich entfaltenden Gassack wird hierbei im Wesentlichen nur durch einen umschwenkenden Abschnitt 28 (in Fig. 3 gepunktet dargestellt) des Seitenwandbereiches 2119 freigegeben. In einer zweiten Variante verlaufen die Schwächungen in den Boden 2116 hinein und weiter in Richtung des Gasgenerators 23. Damit können gemeinsam mit dem Seitenwandbereich 2119 auch Teile des Bodens 2116 des ersten Gehäuseteils 211 zur Freigabe der Öffnung für den sich entfaltenden Gassack verschwenkt werden.

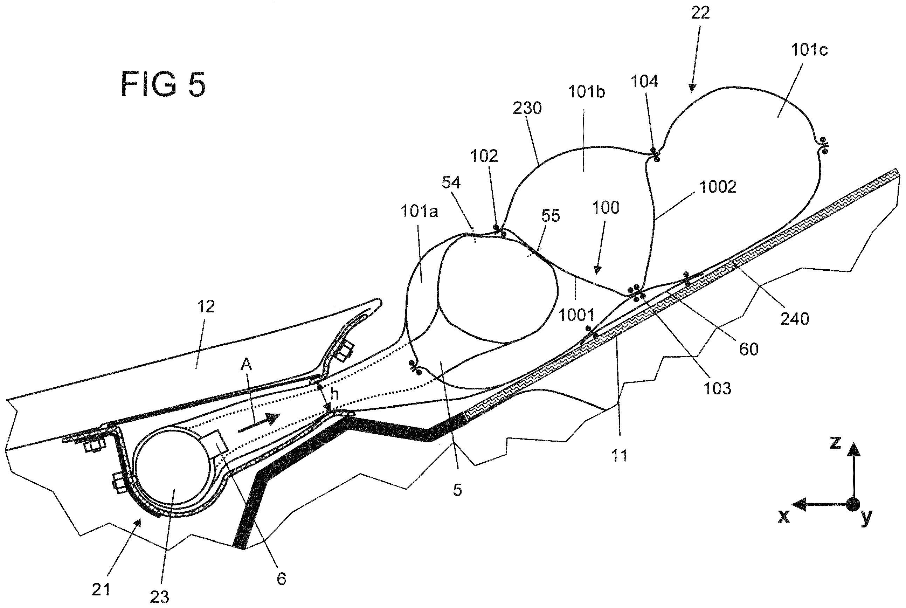

Die Fig. 4 und 5 zeigen die Gassackanordnung 1 im aktivierten Zustand, d.h. mit aufgeblasenen Gassack 22, wobei Fig. 4 eine Draufsicht auf das Fahrzeug mit der Gassackanordnung darstellt und Fig. 5 eine Schnittansicht (entlang B-B in Fig. 4).

Das Aufblasen des Gassacks 22 über den Gasgenerator 23 erfolgt in Abhängigkeit eines Steuersignals einer ECU 3, wobei über Sensoren 4 erfasste Parameter bzgl. des Fahrzeugzustandes von der ECU 3 verarbeitet werden. Werden im Fall einer unmittelbar bevorstehenden oder bereits begonnenen Kollision mit einer außerhalb des Fahrzeugs befindlichen Person ermittelte oder hinterlegte Schwell- bzw. Grenzwertewerte überschritten, erzeugt die ECU 3 zur Aktivierung des Gasgenerators 23 ein Steuersignal, worauf der Gassack 22 durch die durch den Gasgenerator 23 erzeugten Gase aufgeblasen wird.

Ein eine bei einer Kollision auf das Fahrzeug aufprallende Person schützender Bereich (der Schutzbereich des Gassacks, d.h. insbesondere derjenige Bereich des Gassacks, der sich über die Windschutzscheibe 12 und einen der Windschutzscheibe 12 zugewandten Abschnitt der Motorhaube 12 und die sonstige vordere Fahrzeugkarosserie erstreckt) des Gassackes 22 befindet sich z.B. vollkommen außerhalb des durch die Motorhaube abgedeckten Motorraums. Der Schutzbereich des Gassacks 22 deckt insbesondere den unteren Bereich der Windschutzscheibe 12 sowie Bereiche der an die Windschutzscheibe 12 angrenzenden beiden A-Säulen 14 des Fahrzeugs ab. Des Weiteren kann der Schutzbereich des Gassacks zur Reduzierung seiner Dicke senkrecht zur Windschutzscheibe mit inneren Trennelementen 1001, 1002 z.B. in Form von Fangbändern (oder Abschnitten eines Fangbandes) oder Trennwänden versehen sein, die den Schutzbereich in mehrere Kammern (vorliegend drei) unterteilen, wie weiter unten noch erläutert werden wird. Die Kammern erstrecken sich z.B. in ihrer größten Ausdehnung ("Haupterstreckungsrichtung") im Wesentlichen senkrecht zur Fahrtrichtung x, d.h. die Haupterstreckungsrichtung der Kammern verläuft im Wesentlichen in Fahrzeugquerrichtung, wobei der Verlauf der Kammern an eine Krümmung der Windschutzscheibe 12 angepasst sein kann.

Die Kammern des Gassacks 22 können zudem in Strömungsverbindung miteinander stehen, z.B. über ihre den A-Säulen 14 des Fahrzeugs zugewandten Enden. Optional können die Trennwände zwischen den Kammern mit Überströmbereichen 300 versehen werden. Befüllt wird der Gassack über einen Einblasbereich 221, der sowohl mittig als auch außermittig (in Bezug auf die Haupterstreckungsrichtung des aufgeblasenen Gassacks 22, die im Wesentlichen in Fahrzeugquerrichtung verläuft) angeordnet sein kann und der mit dem Gasgenerator 23 verbunden ist.

Ausgehend vom Gasgenerator 23 verläuft im Inneren des Einblasbereiches 221 eine flexible Gasleiteinrichtung 5, die sich bis in den Schutzbereich des Gassacks 2 hinein erstreckt und sich dort zur besseren Befüllung der äußeren Bereiche des Schutzbereiches des Gassacks nach Art einer T-Verzweigung verzweigt, d.h. einen sich entlang der Fahrzeugquerrichtung erstreckenden ersten Abschnitt 51 und einen sich im Wesentlichen entgegengesetzt erstreckenden zweiten Abschnitt 52 aufweist. Im Bereich seiner Ausströmöffnungen ist der Gasgenerator 23 mit einer weiteren (insbesondere starren) Gasleiteinrichtung 6 versehen, welche die freigesetzten Gase in Richtung des Schutzbereiches des Gassacks 22 lenkt. Vorliegend weist die Gasleiteinrichtung 5 jeweils eine Gasaustrittsöffnung an ihren beiden Endbereichen auf. Bei Bedarf können auch an den dazwischen liegenden Bereichen Gasaustrittsöffnungen 53 vorgesehen werden. Denkbar ist natürlich auch, dass die weitere Gasleiteinrichtung 6 zwar separat zur Gasleiteinrichtung 5 ausgebildet ist, jedoch ebenfalls aus einem flexiblen Material (z.B. einem textilen Material, etwa einem Gassackgewebe) besteht. Möglich ist auch, dass anstelle der separaten Gasleiteinrichtungen 5, 6 eine einzige Gasleiteinrichtung verwendet wird. Der Gassack 22 ist insbesondere aus zwei z.B. im Wesentlichen deckungsgleichen Zuschnitten (Ober- und Unterteil) gebildet ist, die mittels einer Umfangsnaht 222 in ihren Randbereichen miteinander verbunden sind. Zur Verbesserung der Gasdichtheit unter Belastung kann die Umfangsnaht 222 durch spezielle Maßnahmen zusätzlich abgedichtet werden, beispielsweise durch eine Beschichtung mit Silikon. Der Einblasbereich 221 und der Schutzbereich des Gassacks sind integraler Bestandteil der beiden Zuschnitte.

Quer zur Fahrtrichtung x und insbesondere benachbart zum Einblasbereich 221 des Gassacks 22, ist der Schutzbereich des Gassackes in seinem der Motorhaube 12 zugewandten Randbereich mit mehreren Fixierbändern 7 versehen, welche mit dem Gehäuse 21 des Gassackmoduls 2 verbunden sind und die den Gassack 22 zusätzlich am Kraftfahrzeug fixieren.

Optional sind darüber hinaus am Gassack 22 Positionierbänder 8 vorgesehen, die zwischen dem Gassack 22 (zwischen dessen Schutzbereich) und der Windschutzscheibe 11 (oder deren Einfassung) verlaufen. Mit ihrem einen Endbereich sind die Positionierbänder 8 mit dem Gehäuse 21 des Gassackmoduls 2 verbunden. Das jeweils andere Ende der Positionierbänder 8 ist an einem Abschnitt des Gassacks 22 festgelegt, welche an der Windschutzscheibe 11 anliegt. Die Positionierbänder 8 sollen die Lage des Gassacks 22 (insbesondere dessen Schutzbereiches) relativ zur Windschutzscheibe 11 bzw. zu den A-Säulen 14 sichern, auch wenn eine durch eine aufprallende Person eingeleitete Kraft auf den Gassack 22 einwirkt.

Des Weiteren kann die Gassackanordnung eine Einrichtung (Rückholeinrichtung) zum Bewegen des aufgeblasenen Gassacks aus dem Sichtfeld des Fahrzeugführers heraus aufweisen. Die Rückholeinrichtung ist bevorzugt auf der Fahrerseite angeordnet (auch auf Fahrer- und Beifahrerseite möglich) und soll nach der Entfaltung des Gassackes 22 und dem eventuellen Aufprall einer Person die Sicht nach vorn, speziell für den Fahrzeugführer, wieder ermöglichen.

Die Rückholeinrichtung kann sowohl selbststeuernd ausgelegt als auch durch eine Steuereinheit (ECU) ansteuerbar und aktivierbar sein. Beispielsweise ist eine Rückholeinrichtung 9 vorgesehen, die ein Verbindungselement in Form eines Rückholbandes 91 um fasst, das mit einem Ende mit dem Gassack 22 verbunden ist (und zwar an seiner der Windschutzscheibe 11 zugewandten Seite). Das andere Ende des Rückholbandes 91 ist mit einer im Gehäuse 21 des Gassacksmoduls 2 angeordneten Rückholmechanik 92 gekoppelt.

Bei der selbststeuernden Auslegung der Rückholeinrichtung 9 umfasst die Rückholeinrichtung 9 Rückstellkrafterzeugungsmittel in Form einer Rückholmechanik 92, die z.B. eine Aufwickelspule mit einer Spiralfeder aufweist. Bei der Entfaltung des Gassackes 22 entsteht durch den sich im Gassackinneren aufbauenden Druck eine Kraft, die über das Rückholband 91 auf die Aufwickelspule übertragen wird, so dass sich die Spiralfeder spannt. Die Spiralfeder wird dabei abgewickelt. Sinkt der Gassackinnendruck, reduziert sich die auf die Aufwickelspule übertragene Kraft, worauf sich die Spiralfeder sich wieder aufwickelt (sich entspannt) und dabei das Rückholband 91 und damit den Gassack 22 aus dem Sichtfeld des Fahrzeugführers zurückzieht. Wenn die Rückholeinrichtung 9 so ausgestaltet ist, dass sie über ein Signal der ECU 3 ausgelöst wird, weist die Rückholmechanik z.B. einen Aktuator auf, der den Rückholvorgang realisiert. Als Aktuator könnten beispielsweise ein Elektromotor, welcher die Aufwickelspule antreibt, oder pyrotechnisch angetriebene Kolben-Zylindereinheit vorgesehen sein.

Darüber hinaus kann unabhängig von der Auslegung der Rückholeinrichtung (selbststeuernd bzw. durch ECU angesteuert) eine Einrichtung 70 zur Senkung des Gassackinnendruckes in das Gassackmodul 2 integriert sein. Durch eine derartige Einrichtung kann dem Abbau des Gassackinnendruckes nach einer bestimmten Zeit ein anderer Verlauf gegeben werden, so dass die für das Zurückziehen des Gassackes 22 aufzubringende Kraft reduziert wird, wie bereits weiter oben erläutert.

Die Einrichtung zur Absenkung des Gassackinnendruckes kann ebenfalls selbststeuernd (z.B. als selbstadaptive Abströmöffnung) ausgebildet sein oder durch eine Steuereinheit (ECU) angesteuert und damit aktiviert werden. Letzteres kann beispielsweise zu einem festen Zeitpunkt nach der Aktivierung des Gasgenerators erfolgen.

Bei ausreichendem Bauraum, kann das Gassackmodul 2 auch derart ausgelegt werden, dass sich der Gassack 22 durch einen vorhandenen Spalt zwischen dem einer Windschutzscheibe 11 zugewandten Randbereich der Motorhaube 12 und der darunter liegenden Fahrzeugstruktur entfalten kann. Reicht der Spalt nicht aus, kann eine Einrichtung zum Anheben der Motorhaube 12 vorgesehen sein. Diese kann den Gassack 22 selbst umfassen, wobei in einer Variante das Anheben der Motorhaube 12 durch eine gezielte Deformation der Scharnieranbindung der Motorhaube 12 ermöglicht wird. In einer anderen Variante wird die Motorhaube 12 vor dem Anheben im Bereich der Scharniere entriegelt und zwar mittels einer, durch die ECU 3 angesteuerte Vorrichtung. Zusätzlich oder alternativ kann die Einrichtung zum Anheben der Motorhaube 12 eine sepa rate Vorrichtung 10 (z.B. in Form eines linear verfahrbaren Aktuators) zum Anheben der Motorhaube umfassen, die ebenfalls durch die ECU 3 angesteuert werden kann.

Fig. 5 zeigt wie erwähnt einen Schnitt durch die Gassackanordnung nach Fig. 4. In der Ansicht der Figur 5 ist zu erkennen, dass der Gassack 22 drei Kammern 101a-c aufweist, die sich hintereinander entlang der Windschutzscheibe 11 erstrecken. Die Unterteilung des Gassacks 22 in die Kammern 101a-c erfolgt durch Trennelemente 1001, 1002 in Form von Abschnitten eines Fangbandes 100, welches ausgehend von einem oberen Zuschnitt (Oberteil 230) zu einem unteren Zuschnitt (Unterteil 240) des Gassacks 22 und wieder zurück verläuft. Anstelle des einstückigen Fangbandes 100 können auch mehrere (insbesondere zwei) separate Fangbänder verwendet werden.

Das Fangband ist an den Zuschnitten 230, 240 über Nähte 102 - 104 fixiert, wobei zwei Endabschnitte des Fangbandes 100 mit zueinander beabstandeten Bereichen des oberen Zuschnitts 230 und ein mittlerer Abschnitt des Fangbandes 100 mit dem unteren Zuschnitt 240 verbunden sind. In der Schnittansicht der Figur 5 ergibt sich somit eine V-Form des Fangbandes 100, wobei sich ein zwischen der Naht 102 und der Naht 103 erstreckender erster Abschnitt 1001 ("erstes Trennelement") des Fangbandes 100 entlang einer ersten Ebene erstreckt und ein zwischen der Naht 104 und der Naht 103 verlaufender zweiter Abschnitt 1002 ("zweites Trennelement") entlang einer zweiten Ebene, die winklig zu der ersten Ebene orientiert ist. Durch diesen V-förmigen Verlauf des Fangbandes 100 nimmt die mittlere Kammer 101 b insbesondere in ihrem der Windschutzscheibe 11 abgewandten Bereich eine Form an, durch die die beiden benachbarten Kammern 101 a, 101c gegen die Windschutzscheibe 11 gedrückt werden. Die mittlere Kammer 101b selbst hat z.B. zumindest abschnittsweise keinen Kontakt zur Windschutzscheibe 11.

Unterstützt werden kann diese Formgebung des Gassacks 22 durch mehrere bandförmige oder einlagige Verbindungen 60, welche die mittlere Kammer 101b überbrücken und deren benachbarte Bereiche (z.B. die Kammern 101a, 101c) miteinander verbinden und gegeneinander verspannen. Diese Ausführung erleichtert insbesondere die Positionierung des Schutzbereiches des Gassacks 22 an der Windschutzscheibe 11, was z.B. den Verzicht auf die im Zusammenhang mit der Fig. 4 beschriebenen Positionierbänder 8 ermöglicht.

Im Fall von Gassackanordnungen, bei denen die Motorhaube nicht durch den Gassack angehoben wird, sollen die Kräfte, die der Gassack in die Motorhaube einleitet, möglichst gering gehalten werden. Neben anderen Maßnahmen (u.a. Faltung des Gassackes) ist deshalb die Dimensionierung der Teile des Gassacks von Bedeutung, welche in dessen entfaltetem Zustand im Austrittsbereich aus der Motorhaube liegen. Bei dem Gassack-modul 2 sind insbesondere der Einblasbereich 221 des Gassackes 22 und der darin verlaufende Teil der flexiblen Gasleiteinrichtung 5 entsprechend gestaltet.

Beide sind z.B. so bemessen, dass ihre Ausdehnung im befüllten Zustand des Gassacks 22 senkrecht zur Strömungsrichtung (Pfeil A) der Gase unmittelbar nach dem Austritt aus der festen Gasleiteinrichtung 6 und senkrecht zur Motorhaube 12 in etwa der geringsten Durchtrittshöhe-h (z.B.-Abstand zwischen Motorhaube 12 und einem darunter liegenden Fahrzeugstruktur bzw. zwischen einem oberen Abschnitt des ersten Gehäuseteils 211 und einem senkrecht zur Entfaltungsrichtung des Gassacks dem oberen Abschnitt gegenüberliegenden unteren Abschnitt des ersten Gehäuseteils 211) für den Gassack bei seiner Entfaltung entspricht. Eine Überschreitung der genannten Dimension ist möglich, wenn plastische Deformationen der Motorhaube bei der Entfaltung des Gassackes weitestgehend vermieden werden.

Die flexible Gasleiteinrichtung 5 ist so dimensioniert, dass sie sich im befüllten Zustand mit einem Bereich, der sich in dem Schutzbereich (d.h. insbesondere außerhalb des Einblasmundes 221) befindet, an im Gassackinneren befindliche Teile (z.B. Fangbänder wie das Fangband 100) und/oder Bereiche der Außenhülle (dem oberen und dem unteren Zuschnitt 230, 240) des Gassackes 22 anlegen kann. Dieser Kontakt verhindert beispielsweise, dass sich die flexible Gasleiteinrichtung 5 bei der Befüllung des Gassackes 22 unkontrolliert bewegt (umherflattert). Zusätzlich bzw. alternativ kann die flexible Gasleiteinrichtung 5 am Gassack 22 (z.B. durch Nähte) fixiert werden.

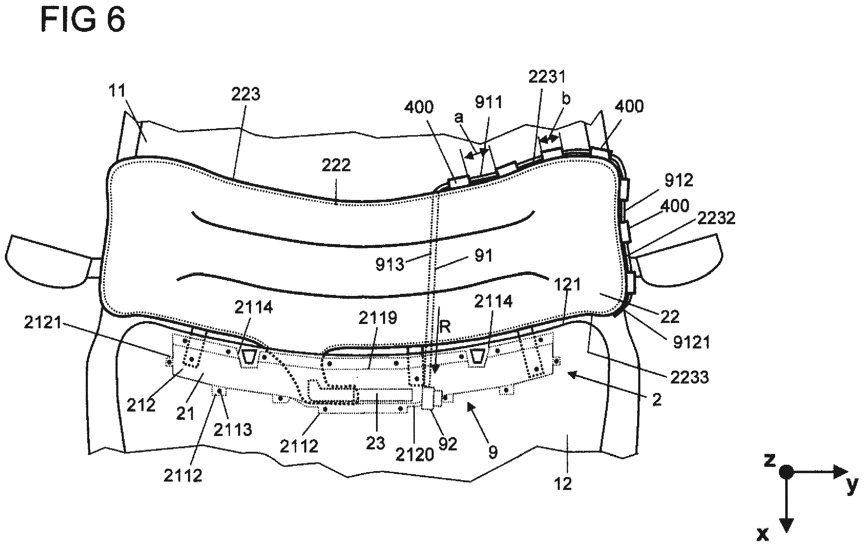

Figur 6 betrifft eine weitere Ausgestaltung des als Rückholband 91 ausgestalteten Verbindungselementes. Zwar ist ein Ende des Rückholbandes 91 ebenfalls über eine Rückholmechanik 92 mit dem Fahrzeug verbunden. Im Unterschied zur Fig. 4 ist das andere Ende des Rückholbandes 91 jedoch nicht an einem mittleren Bereich des aufgeblasenen Gassacks 22 festgelegt, d.h. es ist nicht an einer der Windschutzscheibe 11 zugewandeten (flächigen) Seite des Gassacks 22 festgelegt.

## Patentansprüche

1. Kraftfahrzeug mit einer Gassackanordnung, wobei die Gassackanordnung (2) aufweist:
- einen Gassack (22), der zum Schutz einer sich außerhalb des Kraftfahrzeugs (1) befindlichen Person entlang zumindest eines Teilabschnitts der Frontscheibe (11) und/oder eines sonstigen Abschnitts einer Außenseite des Kraftfahrzeugs (1) entfaltbar ist; und
- ein Gehäuse (21), in dem der Gassack (22) angeordnet ist, wobei
- das Gehäuse (21) von einer sich vor der Frontscheibe (11) erstreckenden Abdeckung (12) eines Aufnahmebereichs des Kraftfahrzeugs (1) verschieden ist, wobei es sich bei der Abdeckung (12) um eine Motorhaube des Kraftfahrzeugs (1) handelt, und wobei
- das Gehäuse (21) so ausgestaltet ist, dass es den Gassack (22) zumindest teilweise zu der Abdeckung (12) des Kraftfahrzeugs (1) hin abdeckt,
- das Gehäuse (21) ein erstes und ein zweites Gehäuseteil (211, 212) umfasst, wobei das erste Gehäuseteil (211) eine Öffnung (2111) zum Einführen des Gassacks (22) in das Gehäuse (21) aufweist und das zweite Gehäuseteil (212) die Öffnung (2111) in dem ersten Gehäuseteil (211) zumindest teilweise überdeckt, und wobei das zweite Gehäuseteil (212) den Gassack (22) zu der Abdeckung (12) des Kraftfahrzeugs (1) hin abdeckt, und
- das erste Gehäuseteil (211) mit dem zweiten Gehäuseteil (212) verbunden ist,
**dadurch gekennzeichnet, dass**
die Gassackanordnung (2) so angeordnet ist, dass die Öffnung (2111) des ersten Gehäuseteils (211) der Motorhaube zugewandt ist, wobei das zweite Gehäuseteil (212) von Abschnitten der Motorhaube überdeckt ist und sich der Gassack (22) zwischen einem der Frontscheibe (11) zugewandten Randbereich (121) der Motorhaube und einer darunterliegenden Fahrzeugstruktur hindurch entfaltet.

2. Kraftfahrzeug nach Anspruch 1, **dadurch gekennzeichnet, dass** das erste Gehäuseteil (211) formstabiler ausgebildet ist als das zweite Gehäuseteil (212).

3. Kraftfahrzeug nach Anspruch 1 oder 2, **dadurch gekennzeichnet, dass** das erste Gehäuseteil (211) eine durch einen Boden (2116) und eine vom Boden (2116) winklig oder senkrecht abstehende Seitenwand (2117) begrenzte Aufnahme ausbildet, in der der Gassack (22) angeordnet ist.

4. Kraftfahrzeug nach einem der vorhergehenden Ansprüche, **dadurch gekennzeichnet, dass** das erste Gehäuseteil (211) einen Aufreißbereich (26) aufweist, der unter dem Druck des sich entfaltenden Gassacks (22) eine Öffnung freigibt, durch die der Gassack (22) aus dem Gehäuse (21) austreten kann.

5. Kraftfahrzeug nach den Ansprüchen 3 und 4, **dadurch gekennzeichnet, dass** der Aufreißbereich (26) durch eine Materialschwächung (27) der Seitenwand (2117) und/oder des Bodens (2116) ausgebildet ist.

6. Kraftfahrzeug nach einem der Ansprüche 1 bis 5, **dadurch gekennzeichnet, dass** das erste Gehäuseteil (211) mindestens eine Befestigungsstruktur (2112) aufweist, über die es mit der Abdeckung (12) des Kraftfahrzeugs (1) verbindbar ist.

7. Kraftfahrzeug nach einem der vorhergehenden Ansprüche, **dadurch gekennzeichnet, dass** der Gassack (22) mehrere Kammern (101a-c) aufweist, die durch mindestens ein flexibles Trennelement (100) voneinander getrennt sind.

8. Kraftfahrzeug nach einem der vorhergehenden Ansprüche, **gekennzeichnet durch** eine Einrichtung (9) zum Bewegen zumindest eines Teilabschnittes des aufgeblasenen Gassacks (22) aus dem Sichtfeld des Fahrzeugführers.

9. Kraftfahrzeug nach Anspruch 8, **dadurch gekennzeichnet, dass** die Einrichtung (9) zum Bewegen mindestens ein Verbindungselement (91) aufweisen, das mit dem Gassack (22) verbunden und mit dem Fahrzeug (1) verbindbar ist, wobei das Verbindungselement (91) elastisch ausgebildet ist oder die Gassackanordnung Rückstellkrafterzeugungsmittel aufweist, über die das Verbindungselement (91) mit dem Gassack (22) verbunden ist oder mit dem Fahrzeug (1) verbindbar ist.

## Claims

1. A motor vehicle comprising a gas bag arrangement, wherein the gas bag arrangement (2) comprising:
- a gas bag (22) which can be deployed for the protection of a person present outside the motor vehicle (1) along at least a section of the front window (11) and/or another portion of an outside of the motor vehicle (1); and
- a housing (21) in which the gas bag (22) is arranged, wherein
- the housing (21) is different from a cover (12) of a receiving region of the motor vehicle (1), which extends in front of the front window (11); wherein the housing (21) is a hood of the motor vehicle (1), and wherein
- the housing (21) is designed such that it at least partly covers the gas bag (22) towards the cover (12) of the motor vehicle (1),
- the housing (21) comprises a first and a second housing part (211, 212), wherein the first housing part (211) includes an opening (2111) for introducing the gas bag (22) into the housing (21) and the second housing part (212) at least partly covers the opening (2111) in the first housing part (211), and wherein the second housing part (212) covers the gas bag (22) towards the cover (12) of the motor vehicle (1), and
- the first housing part (211) is connected with the second housing part (212),
**characterized in that**
the gas bag arrangement (2) is arranged, such that the opening (2111) of the first housing part (211) faces the hood, wherein the second housing part (212) is covered by portions of the hood and the gas bag (22) deploys through between the edge region (121) of the hood facing a front window (11) and a vehicle structure disposed thereunder.

2. The motor vehicle according to claim 1, **characterized in that** the first housing part (211) is formed with a higher dimensional stability than the second housing part (212).

3. The motor vehicle according to claim 1 or 2, **characterized in that** the first housing part (211) forms a receptacle defined by a bottom (2116) and a side wall (2117) protruding from the bottom (2116) at an angle or vertically, in which the gas bag (22) is arranged.

4. The motor vehicle according to any of preceding claims, **characterized in that** the first housing part (211) includes a tear region (26) which under the pressure of the deploying gas bag (22) clears an opening through which the gas bag can (22) exit from the housing (21).

5. The motor vehicle according to claims 3 and 4, **characterized in that** the tear region (26) is formed by a material weakening (27) of the side wall (2117) and/or of the bottom (2116).

6. The motor vehicle according to any of claims 1 to 5, **characterized in that** the first housing part (211) includes at least one fastening structure (2112) via which it is connectable with the cover (12) of the motor vehicle (1).

7. The motor vehicle according to any of the preceding claims, **characterized in that** the gas bag (22) includes a plurality of chambers (101 a-c) which are separated from each other by at least one flexible separating element (100).

8. The motor vehicle according to any of the preceding claims, **characterized by** a means (9) for moving at least a section of the inflated gas bag (22) out of the field of view of the vehicle operator.

9. The motor vehicle according to claim 8, **characterized in that** the means (9) for moving include at least one connecting element (91) which is connected with the gas bag (22) and connectable with the vehicle (1), wherein the connecting element (91) is formed elastic or the gas bag arrangement includes restoring force generating means via which the connecting element (91) is connected with the gas bag (22) or connectable with the vehicle (1).

## Revendications

1. Véhicule automobile comprenant un agencement d'airbag, l'agencement d'airbag (2) présentant :
- un airbag (22) qui peut être déployé pour la protection d'une personne se trouvant à l'extérieur du véhicule automobile (1) le long d'au moins une portion partielle du pare-brise (11) et/ou d'une autre portion d'un côté extérieur du véhicule automobile (1) ; et
- un boîtier (21), dans lequel est disposé l'airbag (22),
- le boîtier (21) étant différent d'un recouvrement (12) d'une région de réception du véhicule automobile (1) s'étendant devant le pare-brise (11), le recouvrement (12) étant un capot de moteur du véhicule automobile (1), et
- le boîtier (21) étant configuré de telle sorte qu'il recouvre l'airbag (22) au moins en partie vers le recouvrement (12) du véhicule automobile (1),
- le boîtier (21) comprenant une première et une deuxième partie de boîtier (211, 212), la première partie de boîtier (211) présentant une ouverture (2111) pour l'introduction de l'airbag (22) dans le boîtier (21) et la deuxième partie de boîtier (212) recouvrant au moins en partie l'ouverture (2111) dans la première partie de boîtier (211), et la deuxième partie de boîtier (212) recouvrant l'airbag (22) vers le recouvrement (12) du véhicule automobile (1), et
- la première partie de boîtier (211) étant connectée à la deuxième partie de boîtier (212),
**caractérisé en ce que**
l'agencement d'airbag (2) est disposé de telle sorte que l'ouverture (2111) de la première partie de boîtier (211) soit tournée vers le capot de moteur, la deuxième partie de boîtier (212) étant recouverte par des portions du capot de moteur et l'airbag (22) se déployant entre une région de bord (121) du capot de moteur tournée vers le pare-brise (11) et une structure sous-jacente du véhicule.

2. Véhicule automobile selon la revendication 1, **caractérisé en ce que** la première partie de boîtier (211) est réalisée avec une forme plus stable que la deuxième partie de boîtier (212).

3. Véhicule automobile selon la revendication 1 ou 2, **caractérisé en ce que** la première partie de boîtier (211) constitue un logement limité par un fond (2116) et une paroi latérale (2117) faisant saillie depuis le fond (2116) suivant un certain angle ou perpendiculairement, dans lequel logement est disposé l'airbag (22).

4. Véhicule automobile selon l'une quelconque des revendications précédentes, **caractérisé en ce que** la première partie de boîtier (211) présente une région de déchirure (26) qui, sous l'effet de la pression de l'airbag (22) se déployant, libère une ouverture à travers laquelle l'airbag (22) peut sortir du boîtier (21).

5. Véhicule automobile selon les revendications 3 et 4, **caractérisé en ce que** la région de déchirure (26) est réalisée par un affaiblissement de matière (27) de la paroi latérale (2117) et/ou du fond (2116).

6. Véhicule automobile selon l'une quelconque des revendications 1 à 5, **caractérisé en ce que** la première partie de boîtier (211) présente au moins une structure de fixation (2112) par le biais de laquelle elle peut être connectée au recouvrement (12) du véhicule automobile (1).

7. Véhicule automobile selon l'une quelconque des revendications précédentes, **caractérisé en ce que** l'airbag (22) présente plusieurs chambres (101a-c) qui sont séparées les unes des autres par au moins un élément de séparation flexible (100).

8. Véhicule automobile selon l'une quelconque des revendications précédentes, **caractérisé par** un dispositif (9) pour déplacer au moins une portion partielle de l'airbag gonflé (22) hors du champ de vision du conducteur du véhicule.

9. Véhicule automobile selon la revendication 8, **caractérisé en ce que** le dispositif (9) pour le déplacement présente au moins un élément de connexion (91) qui est connecté à l'airbag (22) et qui peut être connecté au véhicule (1), l'élément de connexion (91) étant réalisé sous forme élastique ou l'agencement d'airbag présentant des moyens de génération d'une force de rappel par le biais desquels l'élément de connexion (91) est connecté à l'airbag (22) ou peut être connecté au véhicule (1).
